# EUROPÄISCHE PATENTSCHRIFT

(11) **EP 3 383 762 B1**
(45) Veröffentlichungstag und Bekanntmachung des Hinweises auf die Patenterteilung: **12.02.2020**
(21) Anmeldenummer: 16800871.2
(22) Anmeldetag: 19.10.2016
(51) Int. Cl.: B65D 77/20

(54) **ZWEILAGIGE PLATINE**
TWO-LAYERED MEMBRANE CLOSURE
PLATINE À DEUX COUCHES

(30) Priorität: 02.12.2015 AT 510372015; 05.01.2016 AT 500032016
(43) Veröffentlichungstag der Anmeldung: 10.10.2018
(73) Patentinhaber: Constantia Teich GmbH, 3205 Weinburg (AT)
(72) Erfinder: MACHERHAMMER GEB. BRAUNBRUCK, Marie, 1030 Wien (AT); AFFLENZER, Robert, 3205 Weinburg (AT); KLAUSER, Christoph, 3205 Dietmannsdorf (AT); WEGENBERGER, Alfred, 3550 Langenlois (AT); EGER, Frank, 80799 München (DE); CERRI, Igor, 1130 Wien (AT)
(74) Vertreter: Patentanwälte Barger, Piso & Partner
(86) Internationale Anmeldenummer: PCT/AT2016/060084
(87) Internationale Veröffentlichungsnummer: WO 2017/091840

(56) Entgegenhaltungen:
- EP-A1- 1 842 792
- JP-A- 2013 193 757

## Beschreibung

Die Erfindung betrifft eine zweilagige Platine entsprechend dem Oberbegriff des Anspruches 1 und der EP 1 842 792 A1, entsprechend der US2007/0235512 A1.

Die genannte Druckschrift offenbart eine zweilagige Platine, deren Rand an den Rand eines Behälters gesiegelt ist und deren obere, äußere Lage eine Schwächungslinie aufweist, durch die in ihr, d.h. innerhalb des gesiegelten Randes, eine Grifflasche ausgebildet ist. Diese Grifflasche kann ergriffen werden, wodurch sich die äußere von der inneren Lage trennt. Beim weiteren Aufziehen gelangt diese Trennung in einen Bereich, in dem die äußere und die innere Lage so fest miteinander verklebt sind, dass keine weitere Trennung mehr erfolgt, sondern beide Lagen vom Behälterrand abgepeelt werden. Um dies zu erreichen, ist vorgesehen, dass auf der einen Seite der Schwächungslinie ein schwacher Klebstoff vorgesehen ist, der das Lösen der äußeren Schicht von der unteren Schicht und damit das Erfassen erlaubt, und dass auf der anderen Seite ein starker Klebstoff vorgesehen ist, der dies nicht erlaubt und dessen Klebekraft auch größer ist als die Siegelkraft der Platine insgesamt am Behälter. Auf diese Weise können Platinen ohne nach außen ragende Laschen geschaffen werden, wodurch einerseits an Material gespart wird, andererseits verschiedene Probleme mit der Beschädigung der Lasche oder dem unabsichtlichen Öffnung durch das Einklemmen der Laschen beim Transport oder beim Einsortieren in Regale vermieden werden können. Um dies zu erreichen, wird die Doppellagigkeit in Kauf genommen, was noch angeht, doch wird darüber hinaus durch die Verwendung zweier unterschiedlicher Klebstoffe, deren Aufbringungsgrenzen äußerst penibel eingehalten werden müssen, eine herstellungstechnische Komplexität erreicht, die die praktische Verwendung verhindert.

Wenn nämlich der starke Klebstoff in den Bereich des Laschenanfangs reicht, so kann diese nicht ergriffen und der Behälter nicht geöffnet werden. Wenn andererseits der schwache Klebstoff flächenmäßig zu weit aufgetragen ist, so kann in der Folge statt des gemeinsamen Abpeelens ein Abreißen der oberen Lage von der unteren Lage die Folge sein, und der Behälter bleibt geschlossen.

Eine ähnliche Ausbildung der Klebstoffverteilung, aber zu einem anderen Zweck ist aus der JP 2013-193757 bekannt: Um eine mikrowellentaugliche Verpackung zu schaffen ist vorgesehen, einen etwa in der Mitte der zweilagigen Platine verlaufenden Streifen mit schwachem Klebstoff zu versehen, wobei innerhalb des Streifens zwei gewellte oder gezackte Schwächungslinien annähernd parallel zueinander verlaufen und wobei sowohl die untere Lage als auch die obere Lage mit jeweils einer eigenen, außerhalb des Siegelrandes liegenden äußeren Grifflasche ausgebildet sind. Die Bereiche außerhalb des Streifens sind stark miteinander versiegelt. Es tritt daher auch hier das Problem mit der genauen Aufbringung der beiden Klebstoffe auf.

Aus der US 5,514,442 ist es speziell bei Schraubverschlüssen bekannt, unterhalb des Verschlusses eine zweilagige Platine am Behälterrand aufzusiegeln. Über etwa die Hälfte der durch eine Sehne oder einen Durchmesser geteilten Fläche sind die beiden Lagen fest miteinander verklebt, im anderen Bereich sind sie nicht verbunden. Dort kann in einer Ausgestaltung innerhalb des Umrisses die obere Lage mit einer kleineren Fläche als die untere ausgebildet sein, um so eine innerhalb des Umrisses liegende Lasche auszubilden. Ohne schützenden Schraubverschluss oberhalb der gesamten Fläche und noch um den Rand der Platine herum ist diese Ausbildung in der Handhabung zu empfindlich für einen Einsatz im Handel.

Es ist Aufgabe der Erfindung, hier eine Lösung anzugeben, die einfacher und besser resistent gegen Toleranzen ist, als es bisher möglich war, bei der die Kosten niedrig sind und die mechanisch so stabil ist, dass sie ohne weiteren Schutz auch für Joghurtbecher und ähnliches praxistauglich ist.

Die Erfindung erreicht diese Ziele durch die im kennzeichnenden Teil des Anspruches 1 angegebenen Merkmale. Mit anderen Worten, es wird nur ein an Stelle von zwei Klebstoff verwendet, der sehr stark ist, sodass der Verbund zwischen den Lagen im verklebten Bereich sehr stark ist. In einer ersten Variante bewirkt dies, dass das Abpeelen zuverlässig erfolgt. Darüber hinaus wird dieser Klebstoff zwischen den beiden Lagen nicht vollflächig aufgetragen, sondern lässt, bevorzugt nach Art eines Bindenschildes, eine mittlere Bahn der Platine von Rand zu Rand frei. Unter Bindenschild wird, entsprechend dem alten Babenbergerwappen, eine durch zwei zumindest annähernd gerade und zueinander zumindest annähernd parallele Linien in drei Teile geteilte Fläche, deren Umriss von kreisförmig bis polygonal, auch mit teilweise gerundeten Umfang ausgestattet, gehen kann, verstanden. Schließlich ist in diesem von Klebstoff freien, streifenförmigen Bereich eine S-förmige Schwächungslinie vorgesehen, die zumindest zwei, bevorzugt gleichwertige, Laschen ausbildet.

Es soll ausdrücklich darauf hingewiesen werden, dass der Begriff "zweilagig" bzw. "beide Lagen" oder "eine Lage" oder ähnliches in der Beschreibung und den Ansprüchen ausschließlich dazu dient, diese Trennbarkeit zu beschreiben. Es können selbstverständlich, und unabhängig voneinander, eine oder beide dieser Lagen wiederum mehrschichtig ausgebildet sein, wie es im Stand der Technik bekannt ist.

Da zuverlässig kein Klebstoff im Bereich der Laschenspitze, das ist der Bereich, in dem sie bestimmungsgemäß ergriffen werden soll, vorgesehen ist, kann diese problemlos ergriffen und angehoben werden, bis sie schließlich die beiden Lagen bis zur Klebstofffläche voneinander getrennt hat und von dort weg die gesamte Platine abzupeelen beginnt. In einer Ausgestaltung ist zur Erleichterung des Beginns des vollständigen Abpeelens vorgesehen, dass die Schwächungslinie im Randbereich der Platine möglichst geringen Abstand zur Grenze zwischen Klebstofffläche und klebstofffreier Fläche aufweist.

Da der größte Teil des Umfanges der Platine im verklebten Bereich der beiden Lagen liegt, ist ein unbeabsichtigtes Trennen der beiden Lagen insbesondere im Zuge des Transports und des Kommissionierens zuverlässig verhindert.

In einer Variante werden die Stärke der Siegelung und die Stärke des Klebstoffs zwischen den beiden Lagen so gewählt, dass es zum Bruch der Platine entlang des Behälterrandes kommt. Dazu kann, bevorzugt im Bereich der inneren (unteren) Lage, eine Schwächungslinie zumindest über einen Teil des Umfanges knapp innerhalb des Siegelrandes vorgesehen sein.

Auf diese Weise erreicht man es, dass die Herstellung wesentlich vereinfacht und gegenüber Toleranzen und sich ändernden Produktionsbedingungen stabil verhält, durch das Fehlen eines zweiten Klebstoffs wird das Aufbringen des verbleibenden einen Klebstoffs deutlich vereinfacht und verbilligt.

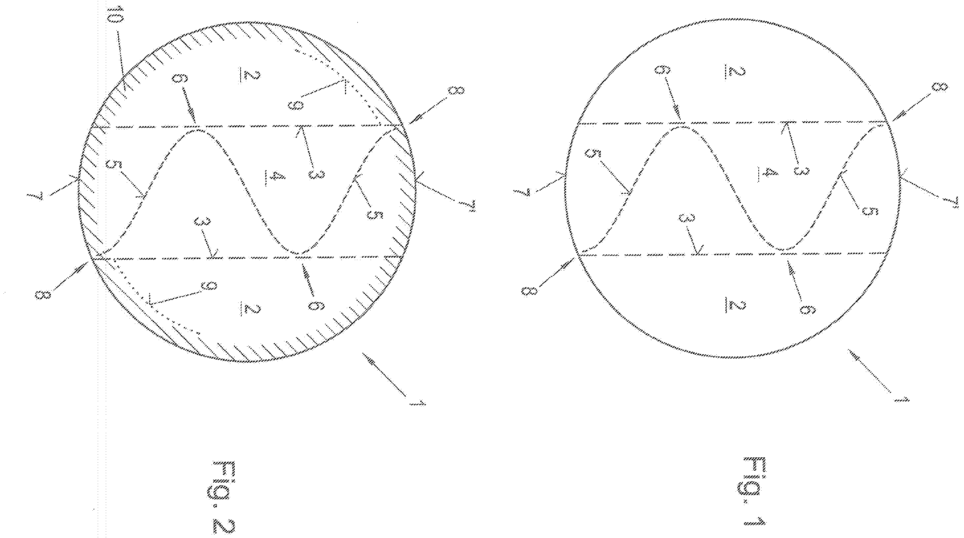

Die Erfindung wird im Folgenden anhand der Zeichnung näher erläutert. Dabei zeigt die Fig. 1 eine ersten Variante einer erfindungsgemäßen Platine rein schematisch in Draufsicht mit durchsichtig zu denkender oberer Lage, um auch die Verklebung besser darstellen zu können und
die Fig. 2 in ähnlicher Ansicht eine Platine entsprechend einer zweiten Variante.

Wie aus Fig. 1 ersichtlich, sind die durch die Sekanten 3 begrenzten äußeren Bereiche 2 der Platine 1 mit Klebstoff zwischen den beiden Lagen bedeckt und verkleben die beiden Lagen in diesen Bereichen 2 fest miteinander. Im mittleren, streifenförmigen Bereich 4, der vom Rand 7 bis zum gegenüberliegenden Rand 7' reicht, ist kein Klebstoff vorgesehen, die beiden Lagen, die die Platine 1 bilden (bzw. die die Platine aufweist), sind hier miteinander nicht verbunden. Die Grenzen 3 zwischen den beiden Bereichen 2 und dem Bereich 4 können geradlinig oder wellenförmig oder zick-zack-förmig sein, bevorzug, weil am einfachsten aufzubringen, ist ein, im technischen Sinn, geradliniger Verlauf.

Weiters ist in der Fig. 1 ganz schematisch eine Schwächungslinie 5 eingezeichnet, die im Wesentlichen sinusförmig oder auf andere Weise zick-zack-förmig von Rand 3 zu Rand 3 verläuft. Dabei ist wesentlich, dass die Linie 5 in ihren "Berg"-Abschnitten 6 nicht in den verklebten Bereich 2 reicht, sondern bevorzugt geringen Abstand von ihm hält. Dieser Abstand kann unter 1mm liegen, letztlich hängt er von der zu erwartenden Summe der sich auf der falschen Seite addierenden Toleranzen der Klebstoffauftragung und der Aufbringung der Schwächungslinie 5 ab und kann gegen Null gehen, soll aber nicht negativ werden.

Im Bereich des Randes 7 der Platine 1, entlang dessen sie mit dem (nicht dargestellten) Behälter, den sie verschließt, versiegelt wird, läuft die Schwächungslinie 5 bevorzugt möglichst knapp zu der Stelle, dem Treffpunkt 8 hin, an der sich an diesem Rand 7 (oder 7') der mit Klebstoff versehene Bereich 2 und der ohne Klebstoff verbleibende Streifen 4 treffen.

Wenn bei der Benutzung der Platine die obere Lage an einer der Stellen im Bereich 6, wo sie Laschen ausbildet, ergriffen wird und nach oben abgezogen wird, beginnt die Peelwirkung dann automatisch in dem Punkt 8, in dem die beste Voraussetzung für das Einleiten des Peelens vorliegt.

Die Fig. 2 zeigt in einer zur Fig. 1 analogen, rein schematischen Ansicht mit durchsichtig gedachter oberer Lage eine Platine entsprechend der zweiten Variante: Die untere Lage weist eine Aufreißlinie 9 auf, durch die das Aufreißen der gesamten Platine erleichtert und der Position nach festgelegt wird. Diese Aufreißlinie schwächt dabei das Material der unteren (inneren) Lage nur soweit, dass deren Barriereeigenschaften nicht leiden. Die Aufreißlinie(n) verlaufen im Wesentlichen parallel zum Rand der Platine, knapp innerhalb einer Siegelfläche 10, mit der die Platine 1 mit dem Gefäß, das sie verschließt, verbunden ist. Die Aufreißlinie 9 ist im gezeigten Beispiel nicht zur Gänze entlang der Siegelfläche 10 geführt, sondern von jedem der beiden Treffpunkte 8 an jeweils ein Stück in der zugehörigen Öffnungsrichtung.

Dies ist, ebenso wie die Länge der einzelnen Aufreißlinien in Kenntnis der Erfindung und des Anwendungsfalles vom Fachmann leicht festzulegen. Dazu gehört auch die Wahl der genauen Lage des Treffpunktes 8, der ja zufolge der Toleranzen bei der Herstellung und dem Füllen und Siegeln, durch das ja erst die Lage der Siegelfläche 10 festgelegt wird, immer deutlich von einem mathematischen "Punkt" abweicht und eine mehr oder weniger definierte Fläche ist. Dieser Treffpunkt 8 soll bei der zweiten Variante knapp am inneren Rand der Siegelfläche liegen, um das Aufreißen zu erleichtern.

Als Material für die beiden Lagen können die unterschiedlichsten aus dem Stand der Technik bekannten Materialien verwendet werden, so kann insbesondere die äußere Lage aus PET, OPP, OPA, PS bestehen und an ihrer Außenseite kann, mit verschiedenen Haftmitteln und Druckuntergründen, ein Druck und gegebenenfalls auch eine Druckschutzschicht aufgebracht sein. Auf die Möglichkeit der Mehrschichtigkeit jeder der beiden Lagen wurde bereits oben hingewiesen.

Auch ist es möglich, eine Spiegeldruckversion zu verwenden, dh. es wird zum Beispiel die Seite bedruckt, welche auf das Aluminium aufkaschiert wird, dies allerdings im sog. Spiegeldruck.

Die innere Lage kann aus Aluminium mit einer Stärke zwischen 5 und 50µm bestehen oder eine solche Schicht enthalten, als Siegellack kommt Hotmelt insbesondere dann zum Einsatz, wenn gegen Glas gesiegelt wird, wenn gegen andere, beispielsweise Kunststoffbecher, gesiegelt wird, die üblichen Heißsiegelmaterialien.

Der Klebstoff zwischen den beiden Lagen ist bevorzugt ein Trockenkaschierklebstoff, wie er auch aus dem Stand der Technik bekannt ist.

Die Erfindung ist nicht auf das dargestellte Ausführungsbeispiel beschränkt, so kann es insbesondere die geometrische Verteilung der klebstofffreien und der mit klebstoffversehenen Flächenanteile anders als dargestellt sein, es kann unter Umständen mehr als eine vollständige Zick-Zack-Linie ausgebildet sein und wenn es auch günstig ist, ist es doch nicht absolut notwendig, dass die Schwächungslinie in den Übergangspunkten 8 oder nahe bei ihnen endet. Zur Schwächungslinie ist noch zu sagen, dass diese in vielen Fällen bevorzugt sogar als Trennlinie ausgebildet sein kann und nicht nur als Schwächungslinie, wodurch es möglich wird, das Ergreifen und Öffnen weiter zu erleichtern, wenn dann auch die obere Lage der Platine nichts zu deren Barriereeigenschaften beiträgt. Es ist somit, auch in Abhängigkeit vom Verhältnis Klebestärke -Siegelstärke, wahlweise möglich, entweder die ganze Platine abzupeelen oder aber die Platine im Randbereich, bevorzugt ringsum, aufzureißen.

**Bezugszeichenliste:**

| | | | |
|---|---|---|---|
| 01 | Platine | 05 | Schwächungslinie |
| 02 | Äußere Bereiche mit Klebstoff | 06 | Bergabschnitt |
| | | 07 | 07' Randbereich |
| 03 | Sekante(n) | 08 | Treffpunkt |
| 04 | Streifenförmiger Bereich ohne Klebstoff | 09 | Aufreißlinie |
| | | 10 | Siegelfläche |

## Patentansprüche

1. Zweilagige Platine (1), deren Randbereich dazu bestimmt ist, an den Rand eines Behälters gesiegelt zu werden, mit Klebstoff zwischen den beiden Lagen, wobei die obere, äußere Lage zumindest eine Schwächungslinie (5) oder eine Schnittlinie aufweist, durch die in ihr eine Grifflasche ausgebildet ist, **dadurch gekennzeichnet, dass** der Klebstoff in zumindest zwei seitlichen Bereichen (2) der Platinenfläche aufgetragen ist und dass im Bereich dazwischen ein vom Rand (7) der Platine zum gegenüberliegenden Rand (7') der Platine reichender Streifen (4) frei von Klebstoff ist, und dass die Schwächungslinie (5) oder Schnittlinie wellenförmig oder zick-zack-förmig in diesem Bereich vorgesehen ist und vom Rand (7) zum gegenüberliegenden Rand (7') reicht.

2. Platine nach Anspruch 1, **dadurch gekennzeichnet, dass** sie im Wesentlichen kreisrund oder oval ausgebildet ist, und dass die Trennung der Bereiche (2, 4) entlang von Sekanten (3) erfolgt.

3. Platine nach Anspruch 1 oder 2, **dadurch gekennzeichnet, dass** die Schwächungslinie (5) oder die Schnittlinie zumindest im Wesentlichen sinusförmig ist.

4. Platine nach zumindest einem der Ansprüche 1 bis 3, **dadurch gekennzeichnet, dass** die Schwächungslinie (5) oder die Schnittlinie am Rand (7 oder 7') in einem Treffpunkt (8) endet, in dem auch die Trennlinie der Bereiche (2, 4) den Rand (7 oder 7') erreicht.

5. Platine nach Anspruch 4, **dadurch gekennzeichnet, dass** eine ihrer Lagen, bevorzugt die innere Lage, zumindest im Bereich jedes Treffpunktes (8) eine parallel zum Rand der Platine verlaufende Schwächungslinie, nämlich eine Aufreißlinie (9) aufweist.

6. Platine nach Anspruch 5, **dadurch gekennzeichnet, dass** die beiden Aufreißlinien (9) zu einer in sich geschlossenen, durchgehenden Aufreißlinie verbunden sind.

## Claims

1. Two-ply lid (1), the edge region of which is designed to be sealed to the edge of a container, having adhesive between the two plies, wherein the upper, outer layer has at least one line of weakness (5) or intersection, through which a pull-tab is designed in said lid, **characterised in that** the adhesive is applied in at least two lateral regions (2) of the lid surface and, in the region therebetween, a strip (4) extending from the edge (7) of the lid to the opposite edge (7') of the lid is free from adhesive, and the line of weakness (5) or intersection is provided either undulatingly or in a zig-zag formation in this region and extends from the edge (7) to the opposite edge (7').

2. Lid according to claim 1, **characterised in that** it is designed to be substantially circular or oval, and the separation of the regions (2, 4) occurs along secants (3).

3. Lid according to claim 1 or 2, **characterised in that** the line of weakness (5) or intersection is at least substantially sinusoidal.

4. Lid according to at least one of claims 1 to 3, **characterised in that** the line of weakness (5) or intersection on the edge (7 or 7') ends at a meeting point (8), in which the dividing line of the regions (2, 4) reaches the edge (7 or 7').

5. Lid according to claim 4, **characterised in that** one of its layers, preferably the inner layer, at least in the portion of each meeting point (8) has a line of weakness, in particular a tear-off line (9), which runs parallel to the edge of the lid.

6. Lid according to claim 5, **characterised in that** the two tear-off lines (9) are connected to form a self-contained, continuous tear-off line.

## Revendications

1. Platine (1) à deux couches, dont la région de bord est destinée à être scellée sur le bord d'un contenant, avec un adhésif entre les deux couches, la couche supérieure extérieure comportant au moins une ligne d'affaiblissement (5) ou une ligne de coupe, au moyen de laquelle une languette de préhension est réalisée dans celle-ci, **caractérisée en ce que** l'adhésif est appliqué dans au moins deux régions (2) latérales de la surface de platine, et **en ce que**, dans la région intermédiaire, une bande (4) s'étendant à partir du bord (7) de la platine jusqu'au bord (7') opposé de la platine est exempte d'adhésif, et **en ce que** la ligne d'affaiblissement (5) ou la ligne de coupe est prévue dans cette zone sous forme ondulée ou en forme de zigzag et s'étend à partir du bord (7) jusqu'au bord (7') opposé.

2. Platine selon la revendication 1, **caractérisée en ce qu'**elle est constituée essentiellement de façon circulaire ou ovale, et **en ce que** la séparation des régions (2, 4) s'effectue le long de sécantes (3).

3. Platine selon la revendication 1 ou 2, **caractérisée en ce que** la ligne d'affaiblissement (5) ou la ligne de coupe est au moins essentiellement de forme sinusoïdale.

4. Platine selon au moins l'une des revendications 1 à 3, **caractérisée en ce que** la ligne d'affaiblissement (5) ou la ligne de coupe sur le bord (7 ou 7') se termine dans un point de convergence (8) dans lequel également la ligne de coupe des régions (2, 4) atteint le bord (7 ou 7').

5. Platine selon la revendication 4, **caractérisée en ce que** l'une de ses couches, de préférence la couche intérieure, au moins dans la région de chaque point de convergence (8), comporte une ligne d'affaiblissement, à savoir une ligne de déchirure (9), parallèle au bord de la platine.

6. Platine selon la revendication 5, **caractérisée en ce que** les deux lignes de déchirure (9) sont réunies en une ligne de déchirure continue fermée sur elle-même.
